# DEMANDE DE BREVET EUROPEEN

(11) **EP 3 444 315 A1**
(43) Date de publication de la demande: **20.02.2019**
(21) Numéro de dépôt: 18191824.4
(22) Date de dépôt: 23.06.2010
(51) Int. Cl.: C09K 5/04

(54) **PROCEDE DE TRANSFERT DE CHALEUR**

(30) Priorité: 28.07.2009 FR 0955267
(62) Demande divisionnaire de: 10745306.0
(71) Demandeur: Arkema France, 92700 Colombes (FR)
(72) Inventeur: RACHED, Wissam, 69630 CHAPONOST (FR)
(74) Mandataire: Dang, Doris

(57) **Abrégé**

La présente invention concerne l'utilisation d'un fluide frigorigène dans les systèmes à Cycle Organique de Rankine comprenant au moins une hydrofluorooléfine, ayant au moins 4 atomes de carbone représentées par la formule (I) R¹CH=CHR² dans laquelle R¹ et R² représentent indépendamment, des groupements alkyle, ayant de 1 à 6 atomes de carbone, substitués par au moins un atome de fluor, éventuellement par au moins un atome de chlore.

## Description

La présente invention concerne un procédé de conversion d'énergie à l'aide d'une composition renfermant des hydrofluorooléfines Elle a plus particulièrement pour objet l'utilisation d'une composition renfermant des hydrofluorooléfines dans les systèmes à Cycle Organique de Rankine.

Avec l'augmentation constante des prix de l'énergie, la nécéssité d'optimiser l'utilisation de l'énergie et sa récupération est en forte croissance. En outre, les campagnes de sensibilisation de réduction d'émissions de dioxyde de carbone indiquent l'importance de la récupération de l'énergie.

Le principe de la récupération de l'énergie est de transformer de l'énergie non exploitée en électricité. La détente d'un fluide tel que le gaz transforme l'énergie cinétique en énergie mécanique. Les turbines produisent ainsi de l'électricité en utilisant le phénomène d'expansion pour entraîner une roue et produire de l'électricité.

Le cycle de Rankine constitue le cycle élémentaire sur un plan industriel pour produire de l'énergie à partir de l'eau liquide/vapeur. Il se compose des phases suivantes : (i) chauffage, (ii) évaporation à température constante jusqu'à atteindre la saturation, (iii) détente isentropique (cas idéal), (iv) condensation à température constante et (v) compression isentropique.

Le cycle de Rankine peut être appliqué à d'autres systèmes thermodynamiques, en particulier avec l'utilisation des fluides différentes de la vapeur d'eau. Les Cycles Organiques de Rankine permettent d'exploiter les propriétés de ces autres fluides.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits.

Les hydrofluorocarbures (HFC) ont remplacé les CFC et/ou les hydrochlorofluorocarbures (HCFC)

Le 1,1,3,3,3-pentafluoropropane (HFC-245fa) a ainsi été proposé comme fluide pour les systèmes à Cycle Organique de Rankine dans lequel le HFC-245fa est chauffé à une température comprise entre 140°F et 300°F (60 et 149°C) (WO 2006/113902).

Le document WO 2005/085398 divulgue l'utilisation des éthers polyfluorés et des cétones polyfluorés comme fluide pour convertir l'énergie thermique en énergie mécanique, en particulier pour les systèmes à Cycle Organique de Rankine, à la température critique ou au-delà de la température critique du HFC-245fa (154°C).

Les problèmes rencontrés avec ces polyfluorés éthers ou cétones est la faible pression au condenseur favorisant ainsi l'infiltration d'air dans les installations. La présence d'humidité et d'oxygène dans les installations conduisent à la corrosion et à la destruction des parties mécaniques.

La demanderesse a maintenant découvert que des compositions renfermant des hydrofluorooléfines conviennent tout particulièrement comme fluide de conversion d'énergie dans les systèmes à Cycle Organique de Rankine, en particulier les systèmes fonctionnant à basse temperature entre 60 et 150 °C. En outre ces compositions ont un ODP négilgeable et un GWP (Global Warming Potentials) inférieur à celui des fluides existants. Ces mélanges présentent aussi des températures critiques supérieures à 150°C, permettant ainsi leur utilisation à des températures plus élevées dans les systèmes à Cycle Organique de Rankine.
La contribution à l'effet de serre d'un fluide est quantifiée par un critère, le GWP qui résume le pouvoir de réchauffement en prenant une valeur de référence de 1 pour le dioxyde de carbone.

Les systèmes à Cycle Organique de Rankine fonctionnent avec des fluides appelés fluides frigorigènes dans un ou plusieurs étage(s).

La présente invention a pour objet un procédé de conversion d'énergie mettant en oeuve un système avec turbine comportant au moins un étage comprenant successivement une étape d'évaporation d'un fluide frigorigène, une étape de détente dans une turbine, une étape de désurchauffe dans un échangeur interne, une étape de condensation dudit fluide et une étape de compression liquide dans une pompe caractérisé en ce que le fluide frigorigène comprend au moins une hydrofluorooléfine, ayant au moins 4 atomes de carbone représentées par la formule (I) R¹CH=CHR² dans laquelle R¹ et R² représentent indépendamment, des groupements alkyle, ayant de 1 à 6 atomes de carbone, substitués par au moins un atome de fluor, éventuellement par au moins un atome de chlore.

De préférence, au moins un groupement alkyle de l'hydrofluorooléfine est complètement substitué par les atomes de fluor.

De préférence, la température de condensation du fluide frigorigène est égale ou supérieure à la température ambiante de l'air ou bien d'une source froide naturelle (lac ou écoulement d'eau), normalement comprise entre -40°C et 50°C suivant les saisons et situation géographique.

De préférence, la température d'évaporation du fluide frigorigène est comprise entre 60 et 150°C , et avantageusement comprise entre 80 °C et 150°C

Comme hydrofluorooléfines de formule (I) particulièrement intéressantes, on peut citer notamment le 1,1,1,4,4,4-hexafluorobut-2-ène, le 1,1,1,4,4,5,5,5-octafluoro-pent-2-ène, le 1,1,1,4-tetrafluorobut-2-ène, le 1,1,1,4,4-pentafluorobut-2-ène, Ie1,1,4-trifluorobut-2-ène, le 1,1,1-trifluorobut-2-ène, le 4-chloro-1,1,1-trifluorobut-2-ène, le 4-chloro-4,4-difluorobut-2-ene.

Les hydrofluorooléfines de formule (I) préférées peuvent être sous forme cis ou trans ou mélange des deux.

Outre les ou l'hydrofluorooléfine(s) de formule (I), le fluide frigorigène peut comprendre au moins un composé choisi parmi les hydrofluorocarbures, les hydrocarbures, les (hydro)fluoroéthers, les hydrochlorofluoropropènes, les hydrofluoropropènes, les éthers, les alcools, le formiate de méthyle, le dioxyde de carbone et le trans-1,2 dichloroéthylène.

Comme hydrofluorocarbures, on peut citer notamment le 1,1,1,3,3-pentafluorobutane, le 1,1,1,2 tetrafluoroéthane, le pentafluoroéthane, le 1,1,1,3,3-pentafluoropropane, le 1,1,1,2,3-pentafluoropropane, le 1,1,1,2,2-pentafluoropropane, le 1,1,1,3,3,3-hexafluoropropane, le 1,1,2,2,3-pentafluoropropane, le 1,1,1,3,3-pentafluorobutane, le 1,1,1,2,2,3,4,5,5,5-decafluoropentane et le 1,1,1,2,3,3,3-heptafluoropropane.

Les hydrocarbures, ayant au moins trois atomes de carbone sont préférés. Les hydrocarbures à cinq atomes de carbone tels que le pentane, isopentane, cyclopentane sont particulièrement préférées.

Les hydrochlorofluoropropenes préférés sont le 2-chloro-3,3,3-trifluoroprop-1-ene et le 1-chloro-3,3,3-trifluoroprop-1-ene, en particulier le trans_1-chloro-3,3,3-trifluoroprop-1-ene.

Les hydrofluoroéthers préférés sont ceux ayant de trois à six atomes de carbone.

Comme hydrofluoroéthers, on peut citer notamment l'heptafluoromethoxy propane, le nonafluoromethoxy butane et le nonafluoroéthoxy butane. L'hydrofluoroéther est disponible sous plusieurs formes isomères tels que le 1,1,1,2,2,3,3,4,4-nonafluoro-éthoxybutane, le 1,1,1,2,3,3 -hexafluoro-2-(trifluorométhyl)-3-éthoxybutane, le 1,1,1,2,2,3,3,4,4-nonafluoro-méthoxybutane, le 1,1,1,2,3,3 -hexafluoro-2-(trifluorométhyl)-3-méthoxybutane, et le 1,1,1,2,2,3,3-heptafluoromethoxypropane.

Les hydrofluoropropènes préférés sont les trifluoropropènes tel que le 1,1,1-trifluoropropène, les tetrafluoropropènes tels que le 2,3,3,3-tetrafluoropropène (HFO-1234yf), et le 1,3,3,3-tetrafluoropropène (cis et/ou trans).

Les éthers peuvent être choisis parmi le diméthyléther, le diéthyléther, le diméthoxyméthane ou le dipropoxyméthane.

Les alcools peuvent être choisis parmi l'éthanol, l'isopropanol, le butanol et l'isobutanol.

De préférence, le fluide frigorigène comprend au moins un hydrofluorooléfine de formule (I) et au moins un hydrofluorocarbure. L'hydrofluorocarbure choisi est avantageusement le 1,1,1,3,3-pentafluorobutane et le 1,1,1,3,3-pentafluoropropane

Des compositions azéotropiques du 1,1,1,4,4,4-hexafluorobut-2-ène ou du 1,1,1,4,4,5,5,5-octafluoro-pent-2-ène avec le formiate de méthyl, le pentane, l'isopentane, le cyclopentane ou le trans-1,2 dichloroéthylène peuvent également convenir.

De préférence, le fluide frigorigène comprend au moins 10 % en poids d'hydrofluorooléfines de formule (I)

Selon un mode de réalisation de l'invention, le fluide frigorigène comprend de 40 à 100 % en poids de 1,1,1,4,4,4-hexafluorobut-2-ène et de 0 à 60 % en poids d'au moins un composé choisi parmi le pentane, l'isopentane, le cyclopentane et le trans-1,2,dichloroéthylène.

Comme fluides frigorigènes particulièrement préférés, on peut citer ceux comprenant de 60 à 100 % en poids de 1,1,1,4,4,4-hexafluorobut-2-ène et de 0 à 40 % en poids de cyclopentane , pentane, d'isopentane ou trans 1,2-dichloroéthylène.

Le fluide frigorigène utilisé dans la présente invention peut comprendre un stabilisant de l'hydrofluorooléfine. Le stabilisant représente au plus 5 % en poids par rapport à la composition totale du fluide.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Le fluide frigorigène utilisé dans le procédé selon la présente invention peut comprendre des lubrifiants tels que l'huile minérale, alkylbenzène, le polyalfaoléfine, le polyalkylène glycol, le polyolester et le polyvinyl éther. Les lubrifiants utilisés avec le fluide frigorigène peuvent comprendre des nanoparticules afin d'améliorer la conductivité thermique du fluide ainsi que sa compatibilité avec les lubrifiants. Comme nanoparticules, on peut citer notamment les particules d'Al₂O₃ ou de TiO₂.

Les lubrifiants utilisés avec le fluide frigorigène peuvent comprendre des agent de déhumidification type zeolite. Les zeolites absorbe l'eau ce qui empeche la corrosion et la dégradation des performances.

### PARTIE EXPERIMENTALE

Evap : évaporateur,
Cond : condenseur,
Temp: température,
P: pression,
Rend : c'est le rapport de la puissance furnie par la turbine à la puissance chaude utile fournie au système.

Les performances du fluide frigorigène dans les conditions de fonctionnement en cycle de conversion d'énergie avec la température à l'évaporateur maintenue à 11,7°C et au condenseur à 149°C sont données ci-dessous.

Rendement isentropique de la turbine: 100 %
C: Isopentane
D: TDCE
F: pentane
G: 1,1,1,4,4,4-hexafluorobut-2-ène
PFE-PFIPK (perfluoroethyl perfluoroisopropyl cétone)
MPFBE (methyl perfluorobutyl ether)

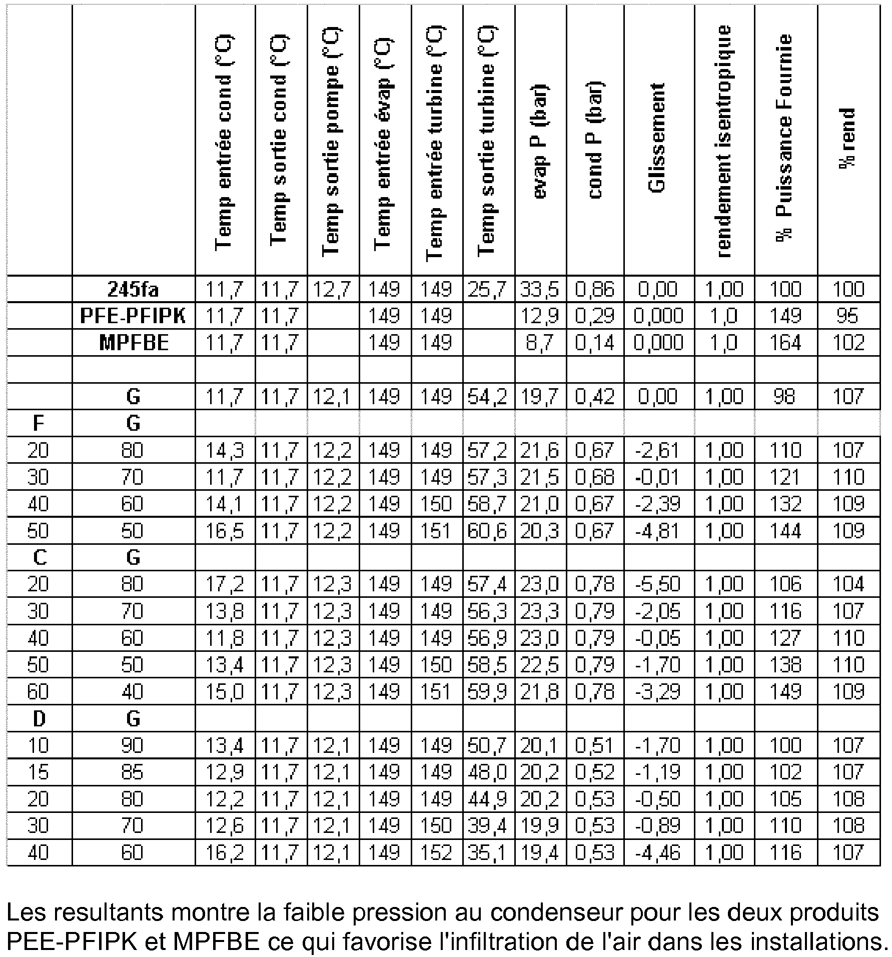

## Revendications

1. Procédé de conversion d'énergie mettant en oeuve un système avec turbine comportant au moins un étage comprenant successivement une étape d'évaporation d'un fluide frigorigène, une étape de détente dans une turbine, une étape de désurchauffe dans un échangeur interne, une étape de condensation dudit fluide et une étape de compression liquide dans une pompe **caractérisé en ce que** le fluide frigorigène comprend au moins une hydrofluorooléfine, ayant au moins 4 atomes de carbone représentées par la formule (I) R¹CH=CHR² dans laquelle R¹ et R² représentent indépendamment, des groupements alkyle, ayant de 1 à 6 atomes de carbone, substitués par au moins un atome de fluor, éventuellement par au moins un atome de chlore.

2. Procédé selon la revendication 1 **caractérisé en ce que** la température d'évaporation est comprise entre 60 et 150°C, de préférence entre 80 et 150°C.

3. Procédé selon la revendication 1 ou 2 **caractérisé en ce que** le fluide frigorigène comprend en outre au moins un composé choisi parmi les hydrofluorocarbures, les hydrocarbures, les (hydro)fluoroéthers, les hydrochlorofluoropropènes, les hydrofluoropropènes, les éthers, le formiate de méthyle, le dioxyde de carbone et le trans-1,2 dichloroéthylène.

4. Procédé selon l'une quelconque des revendications 1 à 3 **caractérisé en ce que** e fluide frigorigène comprend au moins un hydrofluorocarbure choisi parmi le 1,1,3,3,3-pentafluoropropane et le 1,1,3,3,3-pentafluorobutane .

5. Procédé selon l'une quelconque des revendications 1 à 4 **caractérisé en ce que** le fluide frigorigène comprend au moins un hydrofluorocarbure choisi parmi le pentane, l'isopentane et le cyclopentane.

6. Procédé selon l'une quelconque des revendications 1 à 5 **caractérisé en ce que** le fluide frigorigène comprend de 40 à 100 % en poids de 1,1,1,4,4,4-hexafluorobut-2-ène et de 0 à 60 % en poids d'au moins un composé choisi parmi le pentane, l'isopentane, le cyclopentane et le trans-1,2,dichloroéthylène.

7. Procédé selon l'une quelconque des revendications 1 à 6 **caractérisé en ce que** le fluide frigorigène comprend de 60 à 100 % en poids de 1,1,1,4,4,4-hexafluorobut-2-ène et de 0 à 40 % en poids de cyclopentane , pentane, d'isopentane ou trans 1,2-dichloroéthylène.

8. Procédé selon l'une quelconque des revendications 1 à 7 **caractérisé en ce que** le fluide frigorigène comprend un stabilisant.

9. Procédé selon l'une quelconque des revendications 1 à 8 **caractérisé en ce que** le fluide frigorigène comprend un lubrifiant.

10. Procédé selon la revendication 9 **caractérisé en ce que** le lubrifiant est le le polyalkylène glycol, le polyolester ou le polyvinyl éther.
